# FASCICULE DE BREVET EUROPEEN

(11) **EP 1 308 664 B1**
(45) Date de publication et mention de la délivrance du brevet: **18.05.2005**
(21) Numéro de dépôt: 02356222.6
(22) Date de dépôt: 05.11.2002
(51) Int. Cl.: F16L 37/10, F16L 37/42, F16L 37/084

(54) **Raccord rapide pour la jonction amovible de deux canalisations**
Schnellkupplung für die lösbare Verbindung zweier Rohrleitungen
Quick acting coupling for the disconnectable connection of two pipelines

(30) Priorité: 06.11.2001 FR 0114346
(43) Date de publication de la demande: 07.05.2003
(73) Titulaire: STAUBLI FAVERGES, 74210 Faverges (FR)
(72) Inventeur: Froment, Jean-Paul, 74210 Doussard (FR); Chambaud, Antoine, 74210 Giez (FR); Lacroix, Jean-Jacques, 74330 Lovagny (FR)
(74) Mandataire: Myon, Gérard

(56) Documents cités:
- EP-A- 1 217 489
- CH-A- 405 839
- DE-C- 508 311
- US-A- 3 211 479
- US-A- 5 029 973

## Description

L'invention a trait à un raccord rapide qui comprend des éléments propres à s'emmancher l'un dans l'autre pour la jonction amovible de deux canalisations parcourues par un fluide sous pression.

Il est connu de munir un raccord rapide d'un bouton externe destiné à commander un mécanisme de verrouillage de l'élément mâle du raccord à l'intérieur de l'élément femelle, en vue de la libération de cet élément mâle. L'effort de manoeuvre d'un tel bouton augmente avec le diamètre du raccord et la pression du fluide transitant dans ce raccord car le mécanisme de verrouillage comprend un ressort dont la constante de raideur croît en fonction de ces valeurs. En outre, ces mécanismes de verrouillage à bouton sont des mécanismes relativement précis et onéreux.

Il est également connu d'utiliser des raccords comprenant des billes et une douille de verrouillage, les billes étant commandées par la position de la douille autour de l'un des éléments du raccord. Ces raccords requièrent un volume libre suffisant autour des raccords pour la manoeuvre de la douille, un tel volume n'étant pas toujours disponible.

Il est également connu, par exemple de US-A-4,909,545, de ménager sur le corps d'un élément de raccord des rampes de réception d'ergots faisant saillie radialement à partir du corps de l'autre élément. Le verrouillage du raccord requiert un mouvement relatif combiné de translation et de rotation de ses éléments constitutifs, ce qui peut diminuer la fiabilité des assemblages réalisés.

Il est en outre connu de US-A-3,211,479 de prévoir sur un raccord, un manchon apte à pénétrer dans une douille équipée, sur sa surface interne, de pions prévus pour coopérer avec des rampes ménagées sur la surface externe du manchon. Lors de l'ouverture de ce raccord, il existe un risque de mouvement dangereux d'un tuyau flexible aval sous l'effet de la pression régnant dans ce tuyau.

Il est également connu de US-A-5,087,086 de manoeuvrer en rotation une bague d'un élément femelle de raccord qui définit une rampe de verrouillage d'un pion porté par un élément mâle du raccord, cette manoeuvre permettant de faire passer ce pion d'un siège de la rampe vers un autre siège. Une manoeuvre de même type est nécessaire pour les autres déplacements du pion dans la rampe. Or, il est parfois impossible d'accéder à une telle bague pour la manoeuvrer en rotation, notamment lorsque l'un des éléments du raccord est encastré.

C'est à ces inconvénients qu'entend plus particulièrement remédier l'invention en proposant un nouveau type de raccord qui autorise un verrouillage et un déverrouillage sans effort trop important, y compris dans le cas d'un raccord de gros diamètre et pour des fluides sous pression élevée, alors qu'il n'est pas nécessaire d'accéder latéralement au raccord pour le manoeuvrer.

Dans cet esprit, l'invention concerne un raccord rapide pour la jonction amovible de deux canalisations, ce raccord comprenant un premier et un second éléments propres à s'emmancher l'un dans l'autre selon un axe principal du raccord, le premier élément comprenant au moins une rampe de réception d'une partie en saillie radiale du second élément, en vue du verrouillage de ces éléments en configuration passante du raccord, dans lequel
- la rampe ou la partie en saillie est formée dans ou solidaire d'une bague montée sur l'un des éléments précités, en étant libre en rotation et fixe en translation selon l'axe principal du raccord,
- la rampe forme au moins un siège de verrouillage de la partie en saillie en configuration passante du raccord,
- la rampe forme un second siège, décalé axialement par rapport au premier siège dans un sens d'ouverture du raccord, pour le verrouillage de la partie en saillie en configuration de décompression de la canalisation aval et
- la rampe est configurée de telle sorte que le déplacement de la partie en saillie dans la rampe de sa zone d'entrée vers le premier siège, le déplacement de la partie en saillie du premier siège vers le second siège et le déplacement de la partie en saillie du second siège vers la sortie de la rampe sont obtenus en exerçant uniquement des efforts globalement axiaux sur l'un ou l'autre des éléments mâle ou femelle.

Grâce à l'invention, le mouvement de verrouillage et de déverrouillage du raccord, avec arrêt en positon de décompression, peut être effectué essentiellement selon une direction axiale, sans nécessiter de mise en rotation par l'utilisateur. En effet, la rotation correspondant au verrouillage est obtenue par le mouvement de rotation automatique de la bague par rapport à l'élément sur lequel elle est montée, alors que la décompression est obtenue par blocage de l'élément en saillie sur le seconde siège.

Au sens de la présente invention, la notion de « fixe en translation » signifie que la bague est immobilisée axialement entre deux butées. Bien entendu, un certain jeu reste admissible, ce qui correspond à une possibilité de mouvements axiaux de faible amplitude pour la bague.

D'autres aspects avantageux mais non obligatoires de l'invention ressortent des revendications 2 à 10 ci-annexées.

L'invention peut être mise en oeuvre avec différents modes de réalisation.

Selon un premier mode de réalisation, la rampe est formée sur la surface radiale interne d'une bague montée libre en rotation et fixe en translation à l'intérieur de l'élément femelle du raccord, alors que la partie en saillie est fixe par rapport à l'élément mâle.

Selon un second mode de réalisation, la rampe est formée sur la surface radiale interne d'un corps de l'élément femelle du raccord, alors que la partie en saillie est solidaire d'une bague montée libre en rotation et fixe en translation autour de l'élément mâle.

Selon un troisième mode de réalisation, la rampe est formée sur la surface radiale externe d'une bague montée libre en rotation et fixe en translation autour de l'élément mâle du raccord, alors que la partie en saillie est fixe par rapport à l'élément femelle et s'étend radialement vers l'intérieur de celui-ci.

Selon un quatrième mode de réalisation, la rampe est formée sur la surface radiale externe de l'élément mâle du raccord, alors que la partie en saillie est solidaire d'une bague montée libre en rotation et fixe en translation à l'intérieur de l'élément femelle, la partie en saillie s'étendant radialement vers l'intérieur de cet élément.

L'invention sera mieux comprise et d'autres avantages de celle-ci apparaîtront plus clairement à la lumière de la description qui va suivre de six modes de réalisation d'un raccord rapide conformes à son principe, donnée uniquement à titre d'exemple et faite en référence aux dessins annexés dans lesquels :
- La figure 1 est une coupe longitudinale de principe d'un raccord conforme à l'invention, en configuration découplée ;
- La figure 2 est une vue analogue à la figure 1, en configuration passante du raccord ;
- La figure 3 est une vue analogue à la figure 1, en configuration de décompression de la canalisation aval associée au raccord ;
- La figure 4 est une vue en perspective partielle du raccord des figures 1 à 3, l'élément femelle étant représenté partiellement en traits mixtes et avec une partie arrachée ;
- La figure 5 est une vue développée d'une rampe du raccord des figures 1 à 4 ;
- La figure 6 est une coupe partielle de principe à plus grande échelle selon la ligne VI-VI à la figure 5 ;
- la figure 7 est une représentation schématique de la développée de la rampe représentée à la figure 5 ;
- La figure 8 est une vue analogue à la figure 1 pour un raccord conforme à un deuxième mode de réalisation de l'invention ;
- La figure 9 est une vue analogue à la figure 1 pour un raccord conforme à un troisième mode de réalisation de l'invention ;
- La figure 10 est une vue analogue à la figure 1 pour un raccord conforme à un quatrième mode de réalisation de l'invention.
- La figure 11 est une vue analogue à la figure 7, pour un raccord conforme à un cinquième mode de réalisation de l'invention ;
- La figure 12 est une vue analogue à la figure 7, pour un raccord conforme à un sixième mode de réalisation de l'invention.

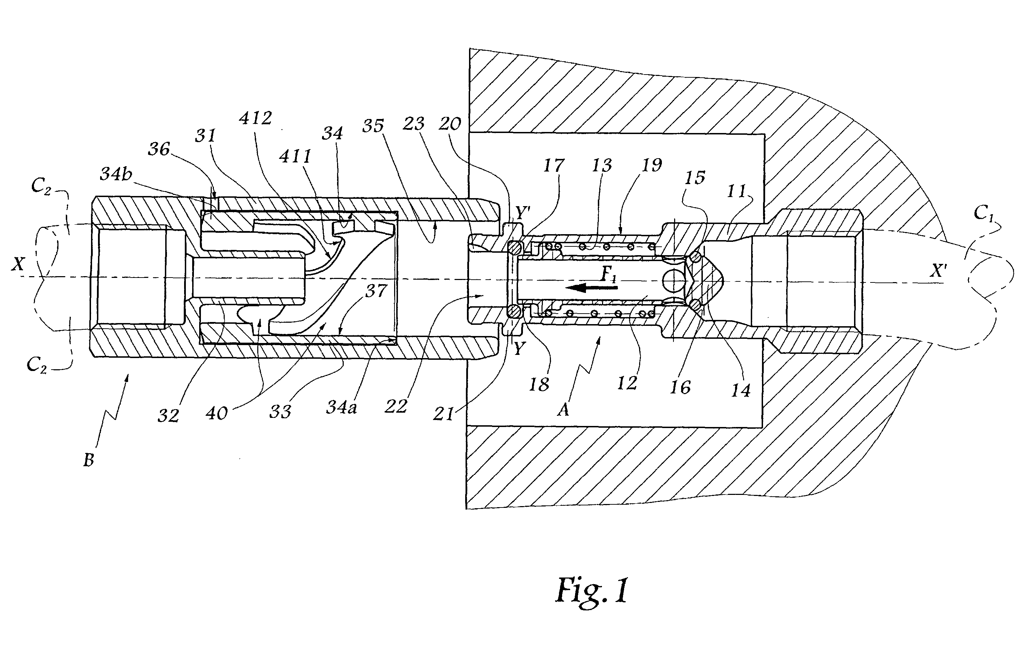

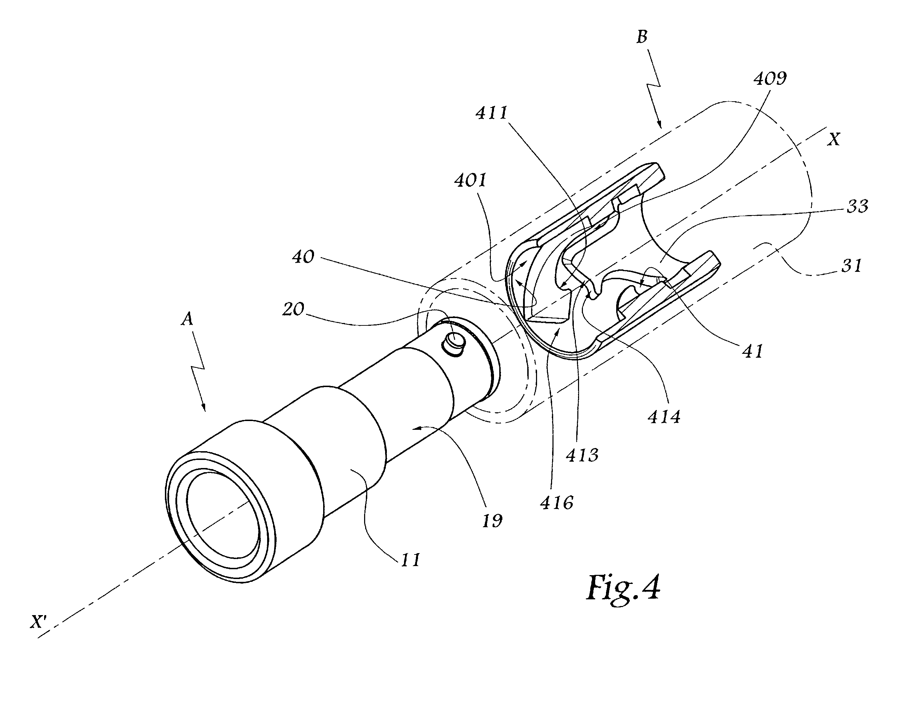

Le raccord représenté sur les figures 1 à 5 comprend un élément mâle A et un élément femelle B prévus l'un et l'autre avec une forme globalement cylindrique à section circulaire. La partie arrière de l'élément mâle A est raccordée fluidiquement à une première canalisation, ou canalisation amont, C₁, alors que la partie arrière de l'élément femelle B est raccordée à une seconde canalisation, ou canalisation aval, C₂.

On note X-X' l'axe principal du raccord formé des éléments A et B, c'est-à-dire l'axe principal des éléments A et B dans les configurations des figures 1 à 4, axe selon la direction duquel ces éléments peuvent être emmanchés l'un dans l'autre.

L'élément A comprend un corps 11 à l'intérieur duquel est disposé un clapet 12 chargé élastiquement par un ressort 13 exerçant un effort F₁ tendant à plaquer une tête 14 du clapet 12 équipé d'un joint torique 15 contre un siège 16 formé par le corps 11. Un second joint torique 17 est prévu dans une gorge annulaire 18 ménagée à l'intérieur du corps 11. Sur sa surface radiale externe 19, le corps 11 est pourvu de deux ergots 20 et 21 diamétralement opposés l'un par rapport à l'autre et s'étendant selon une direction Y-Y' globalement perpendiculaire à l'axe X-X'. Les ergots 20 et 21 sont monobloc avec le corps 11.

L'élément B comprend un corps 31 formant un poussoir 32 prévu pour pénétrer dans le volume interne 22 du corps 11 et pousser le clapet 12 à l'encontre de l'effort F₁.

Une bague 33 est montée dans un logement 34 prévu dans la surface radiale interne 35 du corps 31, la bague 33 étant libre de tourner par rapport au corps 31 autour de l'axe X-X' et fixe en translation par rapport à ce corps le long de cet axe, du fait de son appui contre les bords opposés 34a et 34b du logement 34.

Un perçage 36 relie le logement 34 à l'extérieur de l'élément B, à travers le corps 31.

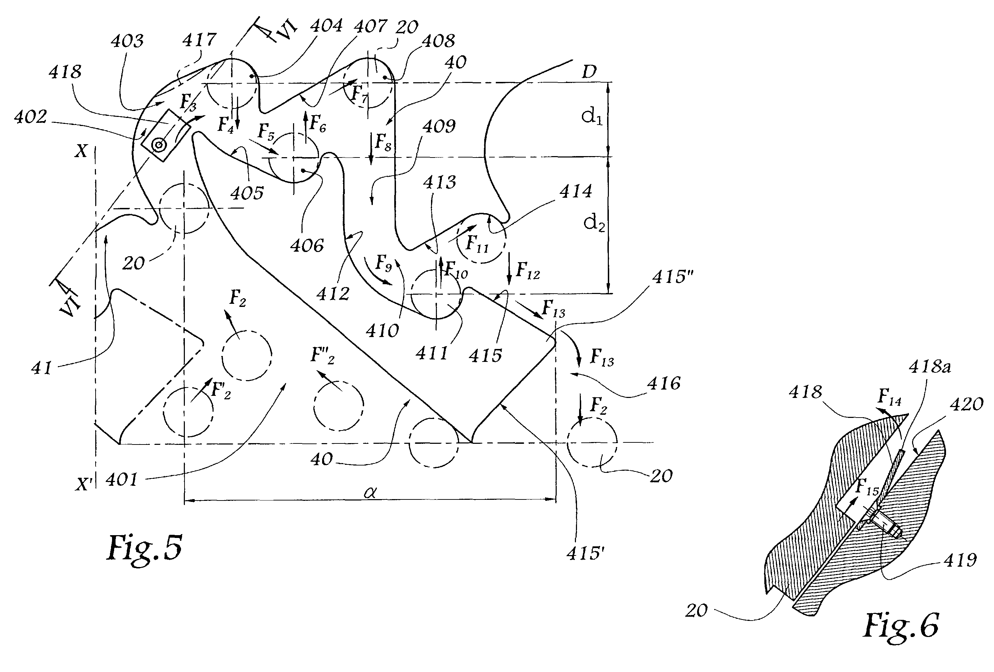

Sur sa surface radiale interne 37, la bague 33 est pourvue de deux rampes 40 et 41 formées en creux dans la surface 37. La géométrie de la rampe 40 est développée à la figure 5 où la trace de l'ergot 20 est représentée dans plusieurs positions, en traits mixtes.

La rampe 40 comprend une section d'entrée 401 convergente en direction d'un passage 402 s'étendant globalement selon une direction parallèle à l'axe X-X'. Une partie courbe 403 est également prévue, cette partie se prolongeant par un renfoncement 404 dont le rayon de courbure est tel qu'il peut recevoir et servir de butée à l'ergot 20.

Lors de l'emmanchement de l'élément mâle A dans l'élément femelle B, l'ergot 20 progresse dans la section 401 en direction du passage 402, comme représenté par les flèches F₂, F'₂ et F''₂ qui correspondent à différentes orientations angulaires possibles des ergots 20 par rapport à la bague 33 au départ de l'emmanchement.

En pratique, la progression de l'ergot 20 correspond à un mouvement relatif de l'ergot par rapport à la bague 33, car la bague tourne autour de l'axe X-X'.

L'ergot 20 parvient alors dans le passage 402 puis suit la partie courbe 403 comme représenté par la flèche F₃, de telle sorte qu'il parvient en butée dans le renfoncement 404. On est alors dans une configuration d'emmanchement maximum de l'élément mâle A dans l'élément femelle B.

L'utilisateur perçoit qu'il a atteint la course maximale et peut relâcher l'élément A ou l'élément B, selon celui qu'il a en main. Dans ce cas, l'effort F₁ tend à repousser le poussoir 32 vers l'extérieur du volume 22, ce qui induit un déplacement relatif des éléments mâle et femelle dans un sens d'ouverture. Ceci implique un déplacement de l'ergot 20 dans la rampe 40 en direction d'une surface 405 inclinée par rapport à l'axe X-X', ce déplacement étant représenté par la flèche F₄. Lorsque l'ergot 20 est en appui contre la surface 405 et compte tenu de l'orientation de cette surface par rapport à l'axe X-X', l'ergot 20 glisse contre cette surface jusqu'à son immobilisation dans un second renfoncement 406 dont la géométrie est telle qu'il peut servir de siège de verrouillage de l'ergot 20 dans la rampe 40.

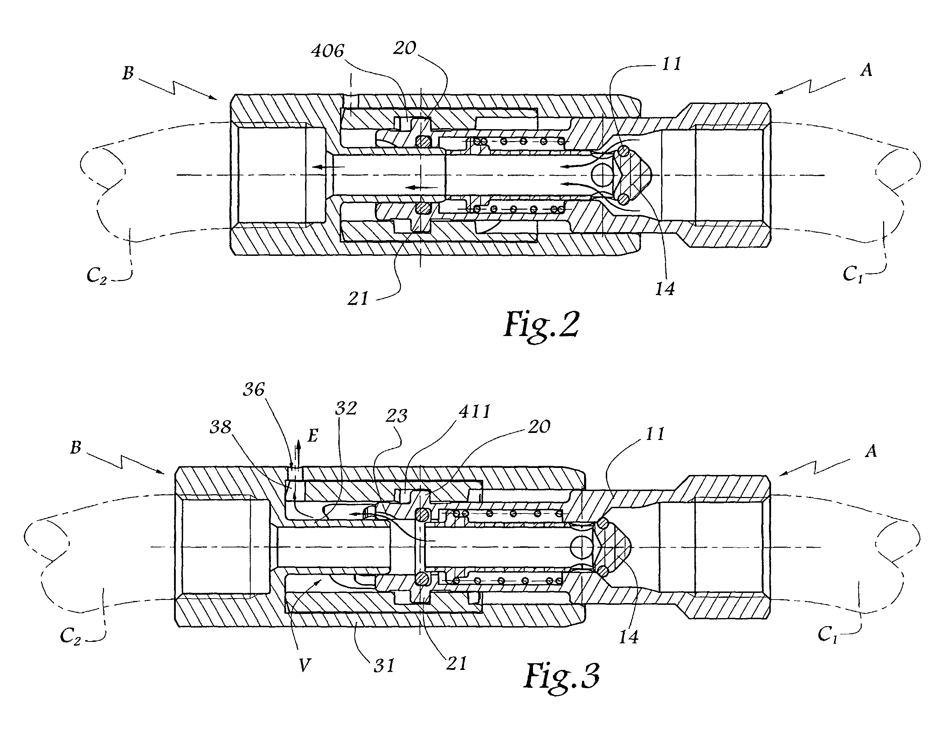

Avec cette position de l'ergot 20 dans la rampe 40, les éléments A et B sont accouplés dans la position de la figure 2, ce qui signifie que le raccord est passant. Une pression élevée du fluide transitant par le raccord, n'a aucune influence négative sur la fiabilité de l'immobilisation relative des éléments A et B.

La flèche F₅ représente la progression de l'ergot 20 le long de la surface 405.

Lorsqu'on souhaite désaccoupler les éléments A et B, il suffit à l'utilisateur d'exercer un nouvel effort axial d'emmanchement de l'élément mâle dans l'élément femelle, ce qui a pour effet d'amener l'ergot 20 au contact d'une surface 407 inclinée par rapport à l'axe X-X' dans un sens opposé à la surface 405. Le mouvement relatif correspondant de l'ergot 20 est représenté par la flèche F₆ à la figure 5. La surface 407 se prolonge par un renfoncement 408 formant butée, comme le renfoncement 404, le mouvement de l'ergot 20 le long de la surface 407 étant représenté par la flèche F₇.

Lorsque l'utilisateur sent qu'il a à nouveau atteint la position d'emmanchement maximum des éléments A et B, il lui suffit de relâcher l'élément qu'il tient en main pour que l'ergot 20 soit chassé du renfoncement 408 sous l'effet de l'effort F₁, ceci étant représenté par la flèche F₈.

La rampe 40 comprend un second passage 409 globalement parallèle à l'axe X-X', ce passage se prolongeant par une partie courbe 410 qui débouche sur un renfoncement 411 formant un second siège de verrouillage de l'ergot 20. On note 412 la surface extérieure de la rampe 40 au niveau de la partie courbe 410, cette surface permettant de guider l'ergot 20 en direction du renfoncement 411, comme représenté par la flèche F_{9.}

On note d₁ la distance, prise parallèlement à l'axe X-X', entre le centre de l'ergot 20, lorsqu'il est dans le renfoncement 404 et dans le renfoncement 406. Cette distance correspond à la « sur-course » effectuée lors de l'emmanchement des éléments A et B.

Les renfoncements 404 et 408 sont globalement alignés selon une direction D perpendiculaire à l'axe X-X', à la figure 5, de sorte que la distance d₁ correspond également à la distance, prise parallèlement à l'axe X-X', entre le centre de l'ergot 20 respectivement en place dans les renfoncements 406 et 408. Cet alignement des renfoncements 404 et 408 n'est cependant pas obligatoire.

On note d₂ la distance, prise parallèlement à l'axe X-X', entre le centre de l'ergot 20 respectivement en place dans les renfoncements 406 et 411. La valeur de la distance d₂ est choisie de telle sorte que, lorsque l'ergot 20 est en place dans le renfoncement 411, le raccord est dans la configuration de la figure 3, dans laquelle le poussoir 32, bien qu'encore engagé dans le volume 22 ne vient pas en recouvrement d'une entaille 23 prévue sur le corps 11, ce qui permet un écoulement du fluide présent dans la canalisation aval C₂ en direction d'un volume V ménagé autour du poussoir 32 et à l'intérieur du corps 31. Une encoche 38 prévue sur un bord de la bague 33 permet une évacuation du fluide vers l'extérieur du raccord, à travers le perçage 36, cet écoulement étant représenté par les flèches E à la figure 3.

Lorsque la canalisation C₂ a été purgée, il suffit à l'utilisateur d'exercer un nouvel effort d'emmanchement axial des éléments A et B, ce qui a pour effet de déplacer l'ergot 20 en direction d'une surface 413 inclinée par rapport à l'axe X-X' dans le même sens que la surface 407, ceci étant représenté par la flèche F₁₀ à la figure 5. L'ergot progresse alors le long de cette surface, comme représenté par la flèche F₁₁ et atteint un troisième renfoncement 414, à partir duquel l'ergot 20 peut être déplacé, comme représenté par la flèche F₁₂, en direction d'une surface 415 inclinée par rapport à l'axe X-X' dans le même sens que les surfaces 405 et 412. L'ergot 20 peut alors glisser le long de cette surface en direction de l'ouverture de sortie 416 de la rampe 40, comme représenté par la flèche F₁₃.

L'ouverture 416 correspond, en fait, à l'ouverture d'entrée de la rampe 41. En effet, l'angle α entre les ouvertures 401 et 416 est égal à environ 180°, chacune des rampes 40 et 41 s'étendant sensiblement sur une demi-circonférence intérieure de la bague 33.

A partir de sa position dans l'ouverture 416, l'ergot 20 peut être aisément retiré de la rampe 40.

La surface 415 définit, avec une surface 415' inclinée en sens opposé par rapport à l'axe X-X', un bec 415'' globalement aligné axialement avec le renfoncement 414. Ce bec s'oppose à une introduction axiale de l'ergot 20 vers le renfoncement 414 et le dévie vers la section 401 et le passage 402, ce qui est représenté par la flèche F'₂ à la figure 5.

Compte tenu de la géométrie de la rampe 40, et de celle de la rampe 41 qui est analogue, on obtient un verrouillage efficace des ergots 20 et 21 par rapport à l'élément femelle B en exerçant uniquement des efforts globalement axiaux, c'est-à-dire parallèles à l'axe X-X', sur l'un ou l'autre des éléments mâle ou femelle du raccord. La progression de l'ergot 20 dans la rampe 40, telle que représentée par les flèches F₂ à F₁₂, est donc obtenue par les mouvements essentiellement axiaux de l'un de ces éléments.

Il est donc possible de manoeuvrer le raccord conforme à l'invention sans avoir accès latéralement à l'un des éléments de raccord, par exemple dans le cas où l'un de ces éléments est encastré, comme représenté en traits mixtes, pour l'élément A, à la figure 1.

En outre, la bague 33 est protégée mécaniquement contre les chocs et contre la pollution par le corps 31. Les ergots 20 et 21 étant monoblocs avec le corps 11, l'embout mâle A est très robuste et peut être monté à l'extrémité d'un tuyau flexible.

Pour améliorer la fiabilité du verrouillage au moment du passage de l'ergot 20 dans la partie courbe 403, on peut prévoir que la surface extérieure 417 de cette partie est incurvée vers l'intérieur de la rampe 40, comme représenté en traits mixtes à la figure 5, ceci induisant une accélération de la vitesse relative de l'ergot par rapport à la rampe après le passage de l'ergot au niveau du sommet de la partie incurvée 417 Ceci évite un relâchement de l'effort axial en direction du renfoncement 404, d'où l'assurance que l'ergot 20 vient bien en butée dans ce renfoncement.

Dans le passage 402, il peut être prévu une lame élastique 418 fixée par un rivet 419 ou tout autre moyen dans le fond 420 de la rampe 40, cette lame 418 ayant tendance, sous l'effet de sa propre élasticité, à décoller son extrémité libre 418a par rapport au fond 420, comme représenté par la flèche F₁₄.

Lorsqu'un ergot 20 progresse en direction du renfoncement 404 comme représenté par la flèche F₁₅ à la figure 6, il repousse l'extrémité 418a de la lame 418 en direction du fond 420, grâce à une déformation élastique de cette lame. En revanche, si l'ergot 20 recule en direction du passage 402 à partir du renfoncement 404, il bute dans la lame 418 sans pouvoir la rabattre en direction du fond. La lame 418 constitue donc un dispositif anti-retour de l'ergot 20 lors de la progression dans la rampe 40, ce qui impose le sens de progression de l'ergot 20 dans la rampe 40 depuis la section d'entrée 401 jusqu'à l'ouverture de sortie 416. En particulier, il n 'est pas possible de désaccoupler le raccord sans faire passer l'ergot 20 par le second siège ou renfoncement 411, ce qui permet une décompression de la canalisation aval C₂.

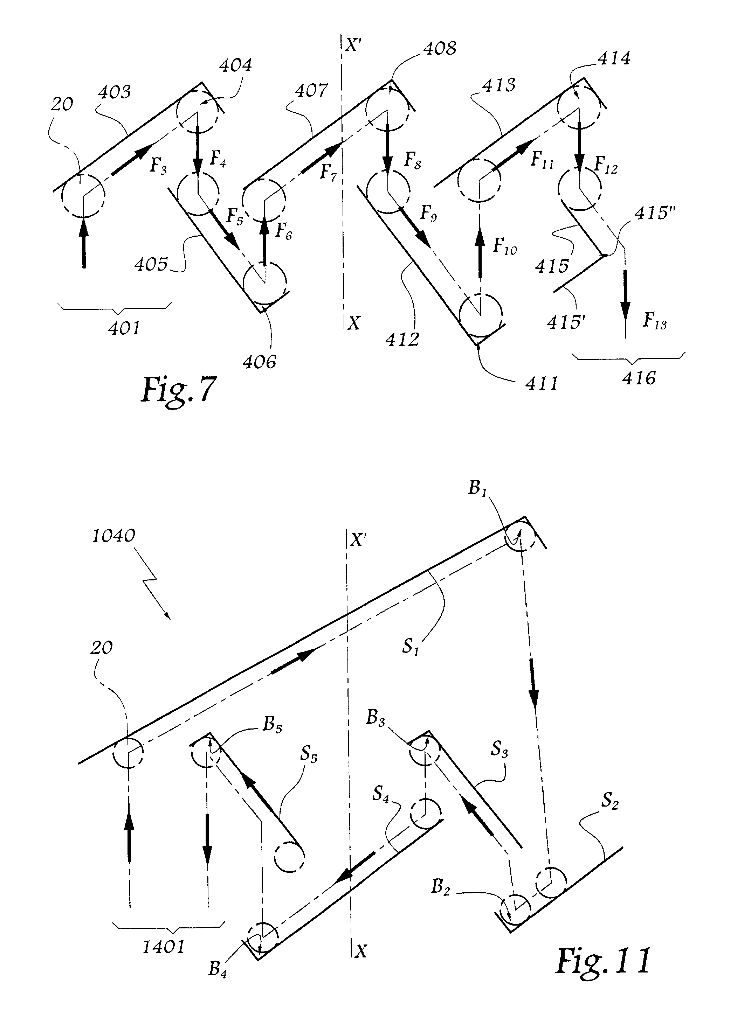

Comme il ressort plus particulièrement de la figure 7, les différentes surfaces 403, 407 et 413, qui conduisent aux renfoncements 404, 408 et 414 et sont inclinées par rapport à l'axe X-X', sont respectivement en regard des surfaces 405 et 412, qui conduisent aux sièges 406 et 411 et sont inclinées en sens inverse par rapport à cet axe.

Ainsi, lorsqu'on exerce des mouvements axiaux sur l'une des parties constitutives du raccord, ce qui se traduit par des déplacements dans le sens des flèches verticales à la figure 7, on atteint l'une de ces surfaces, soit à partir d'un renfoncement, soit à partir d'un siège.

En d'autres termes, les surfaces de guidage respectivement vers les renfoncements ou vers les sièges, sont axialement alignées avec des sièges ou des renfoncements dans lesquels les ergots peuvent changer de direction ou reposer.

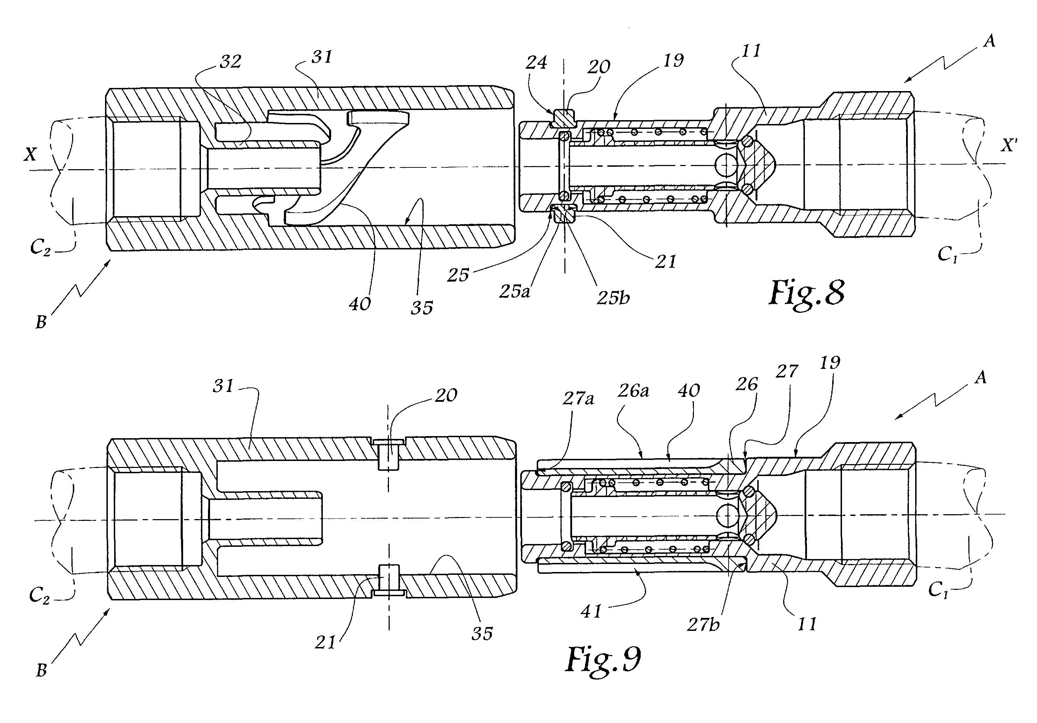

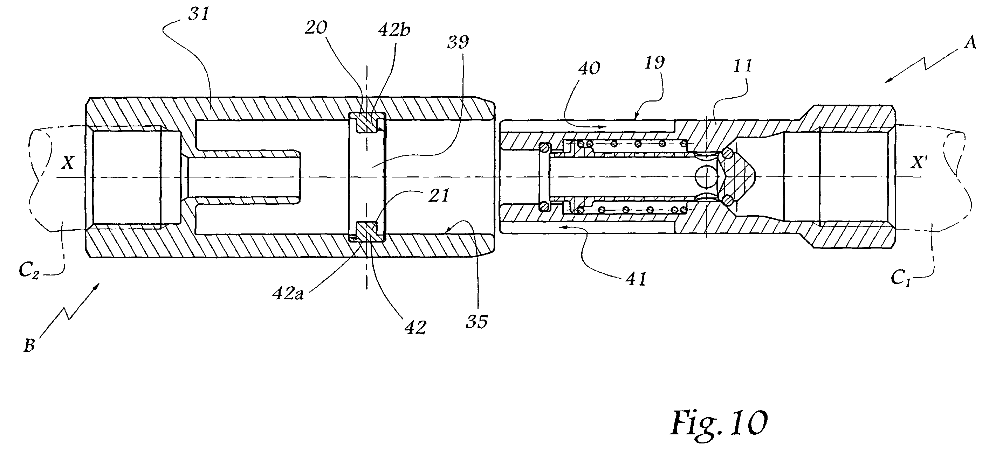

Dans les second, troisième et quatrième modes de réalisation de l'invention représentés respectivement aux figures 8 à 10, les éléments analogues à ceux du premier mode de réalisation portent des références identiques.

Le second mode de réalisation diffère du précédent en ce que les rampes, dont une seule est visible avec la référence 40, sont réalisées sur la surface radiale interne 35 du corps 31 de l'élément femelle, alors que les ergots 20 et 21 diamétralement opposés sont formés sur une bague 24 montée dans une gorge 25 ménagée sur une surface radiale externe 19 du corps 11. Le verrouillage des éléments mâle et femelle A et B est obtenu par la rotation de la bague 24, autour de l'axe longitudinal X-X' du raccord, la bague étant immobilisée en translation parallèlement à cet axe par son appui contre les bords opposés 25a et 25b de la gorge 25.

Dans le troisième mode de réalisation, deux ergots 20 et 21 sont immobilisés sur le corps 31 de l'élément femelle B et font saillie par rapport à la surface 35 en direction de l'axe X-X'. Une bague 26 est prévue dans un gorge 27 ménagée sur la surface radiale externe 19 du corps 11, cette bague définissant des rampes 40 et 41 sur sa surface radiale externe 26a. La bague 26 est montée libre en rotation dans la gorge 27 et est immobilisée en translation, parallèlement à l'axe X-X', par son appui sur les bords opposés 27a et 27b de la gorge 27.

Dans le quatrième mode de réalisation de l'invention, les rampes 40 et 41 sont usinées directement sur la surface radiale externe 19 du corps 11 de l'élément mâle, alors qu'une bague 39 portant deux ergots 20 et 21 est logée, avec possibilité de rotation, dans une gorge 42 ménagée sur la surface radiale interne 35 du corps 31 de l'élément femelle B. La bague 39 peut tourner librement autour de l'axe X-X', alors qu'elle est immobilisée en translation parallèlement à cet axe, car elle vient en appui contre les bords opposés 42a et 42b de la gorge 42.

Les second, troisième et quatrième modes de réalisation fonctionnent d'une façon similaire à celle décrite en référence au premier mode de réalisation.

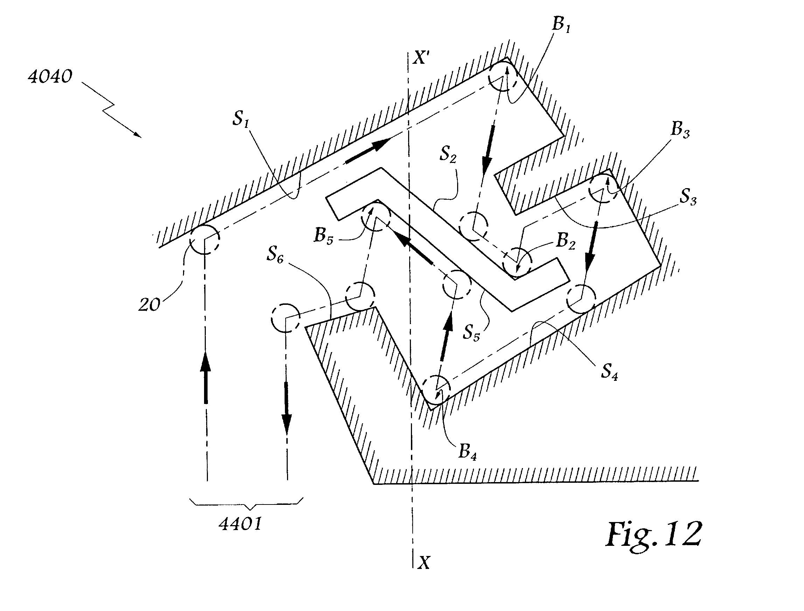

Dans la représentation de la figure 11, une rampe 1040 est formée et délimitée par des surfaces S₁ à S₅ dont chacune se termine par une butée B₁ à B₅. En fait, les butées B₂ et B₄ sont des sièges équivalents aux sièges 406 et 411 du premier mode de réalisation, alors que les butées B₁, B₃ et B₅ correspondent à des renfoncements dans lesquels les parties en saillies peuvent être réorientées en glissant sur une surface S₁, S₃ ou S₅ pour aller en direction d'une autre surface S₂, S₄ ou en direction de la sortie de la rampe 1040.

Une différence par rapport au premier mode de réalisation réside également dans le fait que la rampe 1040 a une zone commune 1401 d'entrée et de sortie d'un élément en saillie, du type du pion 20.

La figure 12 représente un sixième mode de réalisation dans lequel six surfaces S₁ à S₆ inclinées par rapport à un axe longitudinal X-X' du raccord définissent cinq butées B₁ à B₅ dont deux, les butées B₂ et B₄ constituent des sièges de retenue d'une partie en saillie, trois autres butées B₁, B₃ et B₅ constituant des zones de changement de direction de la partie en saillie à l'intérieur de la rampe 4040 ainsi formée. Comme dans les cinquième et septième mode de réalisation, l'entrée et la sortie de la rampe 4040 sont constituées par une zone commune 4401.

Dans les modes de réalisation des figures 11 et 12, les surfaces S₁ à S₆ sont situées en regard des butées B₁ à B₅ en étant décalées axialement par rapport à celles-ci. Les mêmes observations sont valables pour les surfaces et les renfoncements identifiés dans le premier mode de réalisation.

Les caractéristiques techniques des différents modes de réalisation peuvent être combinées entre elles dans le cadre de la présente invention définie par les revendications annexées.

## Revendications

1. Raccord rapide pour la jonction amovible de deux canalisations, ledit raccord comprenant un premier et un second éléments (A, B) propres à s'emmancher l'un dans l'autre selon un axe principal (X-X') du raccord, le premier élément comprenant au moins une rampe de réception d'une partie en saillie radiale du second élément en vue du verrouillage desdits éléments en configuration passante du raccord, dans lequel :
- ladite rampe (40, 41 ; 1040 ; 4040) ou ladite partie en saillie (20, 21) est formée dans ou solidaire d'une bague (33 ; 25 ; 26 ; 39), montée sur l'un desdits éléments (A, B) en étant libre en rotation et fixe en translation selon ledit axe (X-X'),
- ladite rampe forme au moins un siège (406 ; B₂) de verrouillage de ladite partie en saillie en configuration passante du raccord,
- ladite rampe (40, 41 ; 1040 ; 4040) forme un second siège (411 ; B₄), décalé axialement par rapport au premier siège (406 ; B₂) dans un sens d'ouverture du raccord, pour le verrouillage de ladite partie en saillie (20, 21) en configuration de décompression (E) de la canalisation aval (C₂) du raccord et
- ladite rampe (40, 41 ; 1040 ; 4040) est configurée de telle sorte que le déplacement de ladite partie en saillie (20, 21) dans la rampe (40, 41 ; 1040 ; 4040) de sa zone d'entrée (401 ; 1401 ; 4401) vers ledit premier siège (406 ; B₂), le déplacement de ladite partie en saillie dudit premier siège vers ledit second siège (411 ; B₄) et le déplacement de ladite partie en saillie du second siège vers la sortie (416 ; 1401 ; 4401) de ladite rampe sont obtenus en exerçant uniquement des efforts globalement axiaux sur l'un ou l'autre desdits éléments mâle (A) ou femelle (B).

2. Raccord selon la revendication 1, **caractérisé en ce que** ladite rampe (40, 41 ; 1040 ; 4040) est délimitée par des surfaces (403, 405, 407, 412, 413, 415, S₁-S₆) inclinées par rapport audit axe (X-X') et disposées axialement en regard de renfoncements (404, 406, 408, 411 ; B₁-B₅) formant sièges ou butées pour la réception et/ou la réorientation de ladite partie en saillie (20).

3. Raccord selon l'une des revendications précédentes, **caractérisé en ce que** ladite rampe (40, 41) est pourvue d'une ouverture (401) d'entrée (F₂) de ladite partie en saillie (20, 21) et d'une ouverture (416) de sortie (F₁₃) de ladite partie, lesdites ouvertures étant orientées (α) par rapport audit axe selon deux directions radiales distinctes.

4. Raccord selon l'une des revendications 1 ou 2, **caractérisé en ce que** l'entrée et la sortie de ladite rampe (1040 ; 4040) sont constituées par une unique zone (1401 ; 4401) de passage de ladite partie en saillie (20, 21).

5. Raccord selon l'une des revendications précédentes, **caractérisé en ce que** ladite rampe comprend une zone d'entrée (401) convergente en direction d'un premier passage (402) orienté en direction d'une zone de butée (404) correspondant à une configuration d'emmanchement (d₁) desdits éléments (A, B), ladite zone de butée étant disposée en regard d'une surface (405) de guidage de ladite partie en saillie (20, 21) en direction dudit siège (406) de verrouillage en configuration passante du raccord.

6. Raccord selon l'une des revendications précédentes, **caractérisé en ce que** ladite rampe (40, 41) est équipée d'un dispositif (418) anti-retour compatible avec la progression de ladite partie en saillie (20, 21) d'une zone d'entrée (401) vers une zone de sortie (416) de ladite rampe dans un seul sens (F₂).

7. Raccord selon l'une des revendications précédentes, **caractérisé en ce que** ladite rampe (40, 41) est formée sur la surface radiale interne (37) d'une bague (33) montée libre en rotation et fixe en translation à l'intérieur de l'élément femelle (B) du raccord et **en ce que** ladite partie en saillie (20, 21) est fixe par rapport à l'élément mâle (A).

8. Raccord selon l'une des revendications 1 à 6, **caractérisé en ce que** ladite rampe (40, 41) est formée sur la surface radiale interne (35) d'un corps (31) de l'élément femelle (B) du raccord et **en ce que** ladite partie en saillie (20, 21) est solidaire d'une bague (24) montée libre en rotation et fixe en translation autour de l'élément mâle (A).

9. Raccord selon l'une des revendications 1 à 6, **caractérisé en ce que** ladite rampe (40, 41) est formée sur la surface radiale externe (26a) d'une bague (26) montée libre en rotation et fixe en translation autour de l'élément mâle (A) du raccord et **en ce que** ladite partie en saillies (20, 21) est fixe par rapport à l'élément femelle (B) et s'étend radialement vers l'intérieur de celui-ci.

10. Raccord selon l'une des revendications 1 à 6, **caractérisé en ce que** ladite rampe (40, 41) est formée sur la surface radiale externe (19) de l'élément mâle (A) du raccord et **en ce que** ladite partie en saillie (20, 21) est solidaire d'une bague (39) montée libre en rotation et fixe en translation à l'intérieur de l'élément femelle (B), ladite partie en saillie s'étendant radialement vers l'intérieur de cet élément.

## Patentansprüche

1. Schnellkupplung für die lösbare Verbindung zweier Rohrleitungen, wobei die Kupplung ein erstes und ein zweites Element (A, B) umfasst, die entsprechend einer Hauptachse (X-X') der Kupplung ineinandergreifen können, wobei das erste Element mindestens eine Rampe zur Aufnahme eines radialen, hervorspringenden Teils des zweiten Elements zur Verriegelung der Elemente in durchleitender Anordnung der Kupplung umfasst, wobei die Rampe (40, 41; 1040; 4040) oder der hervorspringende Teil (20, 21) in einem Ring (33; 25; 26; 39) ausgebildet ist oder Bestandteil desselben ist, der an einem der Elemente (A, B) in Drehfreiheit und feststehend in Längsrichtung entsprechend der Achse (X-X') montiert ist und die Rampe mindestens einen Verriegelungssitz (406; B₂) des hervorspringenden Teils in durchleitender Anordnung der Kupplung bildet,
**dadurch gekennzeichnet, dass** die Rampe (40, 41; 1040; 4040) einen zweiten, axial in Bezug auf dem ersten Sitz (406; B₂) in Öffnungsrichtung der Kupplung versetzt angeordneten Sitz (411; B₄) für die Verriegelung des hervorspringenden Teils (20, 21) in einer Anordnung der Druckverminderung (E) der stromabwärts gelegenen Leitung (C₂) der Kupplung bildet.

2. Kupplung nach Anspruch 1, **dadurch gekennzeichnet, dass** die Rampe (40, 41; 1040; 4040) durch Flächen (403, 405, 407, 412, 413, 415, S₁-S₆) begrenzt ist, die in Bezug auf die Achse (X-X') geneigt sind und axial gegenüberliegend zu Verstärkungen (404, 406, 408, 411; B₁-B₅) angeordnet sind und Sitze oder Anschläge für die Aufnahme und/oder die Nachführung des hervorspringenden Teils (20) bilden.

3. Kupplung nach einem der vorhergehenden Ansprüche, **dadurch gekennzeichnet, dass** die Rampe (40, 41) mit einer Eingangs(F₂)-Öffnung (401) des hervorspringenden Teils (20, 21) und einer Ausgangs(F₁₃)-Öffnung (416) des genannten Teils versehen ist, wobei die Öffnungen in Bezug auf die Achse in zwei bestimmte radiale Richtungen orientiert (α) sind.

4. Kupplung nach einem der Ansprüche 1 oder 2, **dadurch gekennzeichnet, dass** der Eingang und der Ausgang der Rampe (1040; 4040) aus einer einzigen Durchgangszone (1401; 4401) für den hervorspringenden Teil (20, 21) gebildet sind.

5. Kupplung nach einem der vorhergehenden Ansprüche, **dadurch gekennzeichnet, dass** die Rampe eine Eingangszone (401) umfasst, die in Richtung eines ersten, in Richtung einer Anschlagszone (404) orientierten Durchgangs (402) konvergiert, entsprechend einer ineinandergreifenden (d₁) Anordnung der Elemente (A, B), wobei die Anschlagszone gegenüberliegend zu einer Fläche (405) zur Führung des hervorspringenden Teils (20, 21) in Richtung des Verriegelungssitzes (406) in der durchleitenden Anordnung angeordnet ist.

6. Kupplung nach einem der vorhergehenden Ansprüche, **dadurch gekennzeichnet, dass** die Rampe (40, 41) mit einer Rückdrehsicherungsvorrichtung (418) ausgerüstet ist, die mit dem Fortschreiten des hervorspringenden Teils (20, 21) von einer Eingangszone (401) zu einer Ausgangszone (416) der Rampe in einer einzigen Richtung (F₂) kompatibel ist.

7. Kupplung nach einem der vorhergehenden Ansprüche, **dadurch gekennzeichnet, dass** die Rampe (40, 41) auf der radialen Innenfläche (37) eines Ringes (33) ausgebildet ist, der drehfrei und in translatorischer Richtung feststehend im Inneren des Aufnahmeelements (B) der Kupplung montiert ist, und dass der hervorspringende Teil (20, 21) in Bezug auf das Einsteckelement (A) fest ist.

8. Kupplung nach einem der Ansprüche 1 bis 6, **dadurch gekennzeichnet, dass** die Rampe (40, 41) auf der radialen Innenfläche (35) eines Körpers (31) des Aufnahmeelements (B) der Kupplung ausgebildet ist und dass der hervorspringende Teil (20, 21) Bestandteil eines Ringes (24) ist, der drehfrei und in translatorischer Richtung um das Einsteckelement (A) herum montiert ist.

9. Kupplung nach einem der Ansprüche 1 bis 6, **dadurch gekennzeichnet, dass** die Rampe (40, 41) auf der radialen Außenfläche (26a) eines Rings (26) ausgebildet ist, der drehfrei und fest in translatorischer Richtung um das Einsteckelement (A) der Kupplung montiert ist, und dass der hervorspringende Teil (20, 21) fest in Bezug auf das Aufnahmeelement (B) ist und sich radial in dessen Inneres erstreckt.

10. Kupplung nach einem der Ansprüche 1 bis 6, **dadurch gekennzeichnet, dass** die Rampe (40, 41) auf der radialen Außenfläche (19) des Einsteckelements (A) der Kupplung ausgebildet ist, und dass der hervorspringende Teil (20, 21) Bestandteil eines Ringes (39) ist, der drehfrei und in translatorischer Richtung fest im Inneren des Aufnahmeelements (B) montiert ist, wobei der hervorspringende Teil sich radial in das Innere dieses Elements erstreckt.

## Claims

1. A quick connector for the disconnectable connection of two pipes, said connector comprising a first and a second element (A, B) suitable for fitting into one another along a main axis (X-X') of the connector, the first element comprising at least one ramp for receiving a radially-projecting part of the second element for locking said elements in the fitting configuration of the connector, in which:
- said ramp (40, 41; 1040; 4040) or said projecting part (20, 21) is formed in or integrally with a ring (33; 25; 26; 39), mounted on one of said elements (A, B), being free in rotation and fixed in translation along said axis (X-X'),
- said ramp forms at least one seat (406; B₂) for locking said protruding part in the fitting configuration of the connector,
- said ramp (40, 41; 1040; 4040) forms a second seat (411; B₄) offset axially relative to the first seat (406; B₂) in a direction of opening of the connector, for locking said protruding part (20, 21) in the configuration of decompression (E) of the downstream pipe (C₂) of the connector, and
- said ramp (40, 41; 1040; 4040) is configured such that the displacement of said protruding part (20, 21) in the ramp (40, 41; 1040; 4040) from its entry zone (401; 1401; 4401) towards said first seat (406; B₂), the displacement of said projecting part from said first seat towards said second seat (411; B₄) and the displacement of said projecting part from the second seat towards the exit (416; 1401; 4401) of said ramp are obtained by exerting only overall axial forces on one or the other of said male (A) or female (B) elements.

2. A connector according to Claim 1, **characterised in that** said ramp (40, 41; 1040; 4040) is defined by surfaces (403, 405, 407, 412, 413, 415, S₁-S₆) which are inclined relative to said axis (X-X') and arranged axially opposite recesses (404, 406, 408, 411; B₁-B₅) forming seats or abutments for receiving and/or reorienting said protruding part (20).

3. A connector according to one of the preceding claims, **characterised in that** said ramp (40, 41) is provided with an entry (F₂) opening (401) of said protruding part (20, 21) and an exit (F₁₃) opening (416) of said part, said openings being oriented (α) in two separate radial directions relative to said axis.

4. A connector according to one of Claims 1 or 2, **characterised in that** the entry and the exit of said ramp (1040; 4040) are formed by a single zone (1401; 4401) for passage of said projecting part (20, 21).

5. A connector according to one of the preceding claims, **characterised in that** said ramp comprises an entry zone (401) converging towards a first passage (402) oriented towards an abutment zone (404) corresponding to a fitting configuration (d₁) of said elements (A, B), said abutment zone being arranged opposite a surface (405) for guiding said projecting part (20, 21) towards said seat (406) for locking in a fitting configuration of the connector.

6. A connector according to one of the preceding claims, **characterised in that** said ramp (40, 41) is fitted with a non-return device (418) compatible with the advance of said protruding part (20, 21) from an entry zone (401) towards an exit zone (416) of said ramp in a single direction (F₂).

7. A connector according to one of the preceding claims, **characterised in that** said ramp (40, 41) is formed on the inner radial surface (37) of a ring (33) mounted to be free in rotation and fixed in translation within the female element (B) of the connector and **in that** said protruding part (20, 21) is fixed relative to the male element (A).

8. A connector according to one of Claims 1 to 6, **characterised in that** said ramp (40, 41) is formed on the inner radial surface (35) of a body (31) of the female element (B) of the connector and **in that** said protruding part (20, 21) is integral with a ring (24) mounted to be free in rotation and fixed in translation around the male element (A).

9. A connector according to one of Claims 1 to 6, **characterised in that** said ramp (40, 41) is formed on the outer radial surface (26a) of a ring (26) mounted to be free in rotation and fixed in translation around the male element (A) of the connector and **in that** said protruding part (20, 21) is fixed relative to the female element (B) and extends radially towards the inside thereof.

10. A connector according to one of Claims 1 to 6, **characterised in that** said ramp (40, 41) is formed on the outer radial surface (19) of the male element (A) of the connector and **in that** said protruding part (20, 21) is integral with a ring (39) mounted to be free in rotation and fixed in translation within the female element (B), said protruding part extending radially towards the inside of this element.
